# EUROPÄISCHE PATENTSCHRIFT

(11) **EP 1 193 177 B1**
(45) Veröffentlichungstag und Bekanntmachung des Hinweises auf die Patenterteilung: **17.04.2002**
(21) Anmeldenummer: 00121032.7
(22) Anmeldetag: 27.09.2000
(51) Int. Cl.: B65B 1/48, B65B 57/18

(54) **Verfahren zur Überprüfung der Füllung von Höfen oder Näpfen einer Blisterverpackung für Arzneimittel**
Method of checking the filling of compartments of a blister package for medicaments
Procédé pour vérifier le remplissage d'alvéoles d'un blister pour médicaments

(43) Veröffentlichungstag der Anmeldung: 03.04.2002
(73) Patentinhaber: Uhlmann VisioTec GmbH, 88471 Laupheim (DE)
(72) Erfinder: Mertens, Richard, Dipl.-Ing., 88471 Laupheim (DE); Prinz, Heino, Dr., 88471 Laupheim (DE)
(74) Vertreter: Strobel, Wolfgang, Dipl.-Ing.

(56) Entgegenhaltungen:
- EP-A- 0 302 727
- US-A- 2 142 920
- US-A- 4 245 243
- US-A- 4 847 487

## Beschreibung

Die vorliegende Erfindung betrifft ein Verfahren zur Überprüfung der Füllung von Höfen oder Näpfen einer Blisterverpackung für Arzneimittel, nach dem Oberbegriff des Anspruchs 1.

Pulverförmige oder feste Arzneimittelsubstanzen werden in Höfen oder Näpfen von Blisterverpackungen verpackt und gelangen in diesen Verpackungen zu dem Patienten.

Bei Arzneimitteln kommt es auf die hochgenaue Abfüllung der gewünschten Menge pro Hof oder Napf an, was zur Ausbildung sehr aufwendiger Kontrollvorrichtungen geführt hat. Herkömmlicherweise werden die Mengen zur Kontrolle gewogen.

Aus der DE 199 20 494 A1 ist eine Vorrichtung zum Wiegen von pharmazeutischen Behältnissen, insbesondere von Ampullen, bekannt, die eine Wiegeeinrichtung mit Wiegebechern zum Wiegen der Behältnisse vor und nach deren Befüllen aufweist. Mittels eines Greifers werden die Behältnisse während einer Stillstandsphase einer taktweise arbeitenden Transporteinrichtung im Bereich einer Fülleinrichtung entnommen, gewogen, die Behältnisse zum Befüllen wieder der Transporteinrichtung zugeführt, diese gefüllt und nach dem Befüllen wieder erneut entnommen und gewogen. Auch wenn, wie in dieser Druckschrift angegeben, die Vorrichtung relativ einfach aufgebaut sein soll und nur einen kleinen Raum benötigt, so besteht doch der wesentliche Nachteil darin, daß aufgrund des zweimaligen Wiegens der Behältnisse, beispielsweise der Höfe oder Näpfe, vor und nach dem Befüllen ein erheblicher Zeitaufwand für die Kontrolle der Befüllung benötigt wird.

Auf einer zur Abfüllung von festen und pulverförmigen Arzneimitteln entwickelten Hochleistungsblistermaschine werden bis zu 120 Höfe bzw. Näpfe pro Sekunde gefüllt. Aufgrund dieser hohen Menge wird die Kontrolle mittels Wiegen stichprobenartig durchgeführt. Dabei wird eine Stichprobe automatisch gezogen, diese Stichprobe der Waage mittels Handlingsystem zugeführt, der gefüllte Napf gewogen, der Napf geleert, also beispielsweise das Pulver ausgeblasen, der leere Napf gewogen und der Differenzwert entsprechend ermittelt.

Die stichprobenartige Kontrolle ist jedoch nicht ausreichend, um die richtige Befüllung der Höfe und Näpfe sicherzustellen, da bei Füllmengen von weniger als einem Milligramm pro Napf ersichtlich ist, daß Abweichungen geringster Füllmengen eine fehlerhafte Befüllung bedeuten.

Eine weitere gattungsgemässe Vorrichtung, wobei zur Überwachung der Füllung Sensoren eingesetzt werden, ist bekannt aus der US-A-4 847 487.

Der vorliegenden Erfindung liegt deshalb die Aufgabe zugrunde, ein Verfahren zur Überprüfung der Füllung von Höfen und Näpfen einer Blisterverpackung für Arzneimittel zu schaffen, die mit einer pulverförmigen oder festen Substanz gefüllt wurden, mit dem eine sehr große Zahl der abgefüllten Mengen überprüft werden kann und die Überprüfung derart schnell erfolgt, daß damit die Abfüllung auf Hochleistungsfüllmaschinen kontrolliert werden kann.

Diese Aufgabe wird durch die Merkmale des Anspruchs gelöst.

Das erfindungsgemäße Verfahren zeichnet sich dadurch aus, daß das Volumen der pulverförmigen oder festen Substanz mittels eines Sensors erfaßt wird, und der erfaßte Volumenwert einer Auswerteeinrichtung zugeführt wird, in der ein Vergleich des ermittelten Volumenwerts mit einem Volumen-Sollwert durchgeführt wird.

Dadurch wird erreicht, daß das abgefüllte Volumen in den Verpackungen erfaßt und kontrolliert wird, ohne daß einerseits der Abfüllprozess durch einen Wiegeprozess unterbrochen werden muß bzw. kann die beim Stichprobenverfahren verloren gegangene Arzneimittelmenge vermieden werden.

Durch das unmittelbare Erfassen des abgefüllten Volumens wird somit der Zeitbedarf für die Erfassung gegenüber dem Zeitbedarf für das oben beschriebene Wiegen extrem verringert, wodurch die Abfüllmenge pro Zeiteinheit erheblich erhöht werden kann.

Insbesondere erfolgt die Erfassung des abgefüllten Volumens berührungsfrei, was auch zur weiteren Zeitersparnis bei der Kontrolle beiträgt.

Vorteilhafterweise wird der Vergleichswert aus ermitteltem Volumenwert und Volumen-Sollwert mittels einer Anzeigevorrichtung angezeigt. Dadurch kann beispielsweise die Bedienungsperson der Abfüllvorrichtung jederzeit das abgefüllte Volumen kontrollieren.

Wird erfindungsgemäß jeder Hof oder Napf der Verpackung mittels eines Sensors erfaßt, so erfolgt eine 100 %ige Kontrolle der abgefüllten Arzneimittel, wodurch die richtige Abfüllung aller Arzneimittel sichergestellt werden kann.

Vorteilhafterweise entspricht die Anzahl der vorgesehenen Sensoren der Anzahl der Höfe oder Näpfe in einer Reihe der Verpackung, wodurch ein sog. Zeilensensor geschaffen wird, mit dem alle Höfe oder Näpfe einer Reihe der Verpackung überprüft werden können. Die Erfassung kann sowohl im bewegten als auch unbewegten Zustand der Verpackung erfolgen.

Alternativ kann die Anzahl der Sensoren der Anzahl der Höfe oder Näpfe einer Verpackung entsprechen, d.h. die Befüllung wird mit einem sog. Matrixsensor kontrolliert. Es ist ersichtlich, daß bei gleichzeitiger Überprüfung von mehreren bis vielen Höfen oder Näpfen eine entsprechend schnelle Abfüllung insgesamt erreicht wird.

Zur hochgenauen Erfassung des Volumens der Substanz, die sich in einem Hof oder Napf befindet, erfolgt die Erfassung mittels Matrixsensor im unbewegten Zustand der Verpackung. Diese unbewegte Phase ist jedoch äußerst kurz, da der Sensor in der Lage ist, in äußerst kurzer Zeit die Erfassung durchzuführen. Beispielsweise werden für die Erfassung nur einige Nanosekunden benötigt.

Mit besonderem Vorteil ist der beim Verfahren verwendete Sensor ein kapazitiver Meßsensor, welcher einen einfachen Aufbau aufweist und dessen Erfassungssignal auf einfache Weise verarbeitet werden kann.

Alternativ kann der Sensor auch ein optisch dreidimensionaler Bilderfassungssensor sein, mit dessen Hilfe die Füllmenge exakt ermittelt werden kann.

Weitere Einzelheiten, Merkmale und Vorteile der vorliegenden Erfindung ergeben sich aus der nachfolgenden Beschreibung unter Bezugnahme auf die Zeichnungen. Darin zeigt:
- Fig. 1: ein Blockschaltbild einer Ausführungsform der erfindungsgemäßen Sensor- und Auswertungs-Elektronik;
- Fig. 2: eine Ausführungsform des Sensor-Systems mit einem Zeilensensor; und
- Fig. 3: eine Ausführungsformbildung eines Sensor-Systems mit einem Matrixsensor.

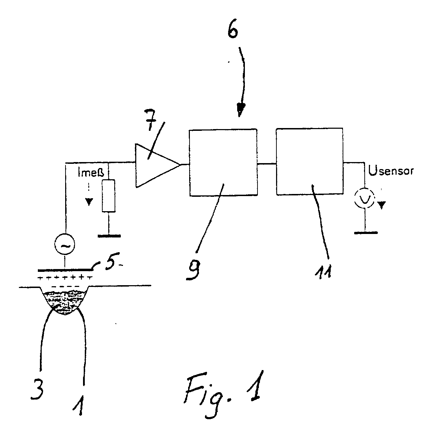

In Fig. 1 ist in einem Blockschaltbild die Sensor- und Auswertungs-Elektronik dargestellt, mit Hilfe derer das erfindungsgemäße Verfahren durchgeführt werden kann. In einem Hof oder Napf 1 befindet sich ein pulverförmiges Arzneimittel 3, dessen Volumen überprüft werden soll. Der Napf 1 ist ein Napf einer herkömmlichen und weit verbreiteten Blisterverpackung, welche mehrere Näpfe aufweist, die in der Regel reihenförmig angeordnet sind.

Mittels eines Sensors 5 wird berührungsfrei das Arzneimittelvolumen 3 ermittelt. Wie aus Fig. 1 ersichtlich, ist der Sensor 5 ein kapazitiver Meßsensor, der ein Signal liefert, das über einen Vorverstärker 7 einer Signalverarbeitungseinrichtung 9 und anschließend einer Signalkorrektureinrichtung 11 zugeführt wird. Die Signalkorrektureinrichtung dient beispielsweise zur Nulllinien-Kompensation. Vorverstärker 7, Signalverarbeitungseinrichtung 9 und Signalkorrektureinrichtung 11 bilden eine Auswerteeinrichtung 6.

Der Sensor 5 kann beispielsweise so ausgebildet sein, daß er nur einen Napf oder Hof 1 überprüft.

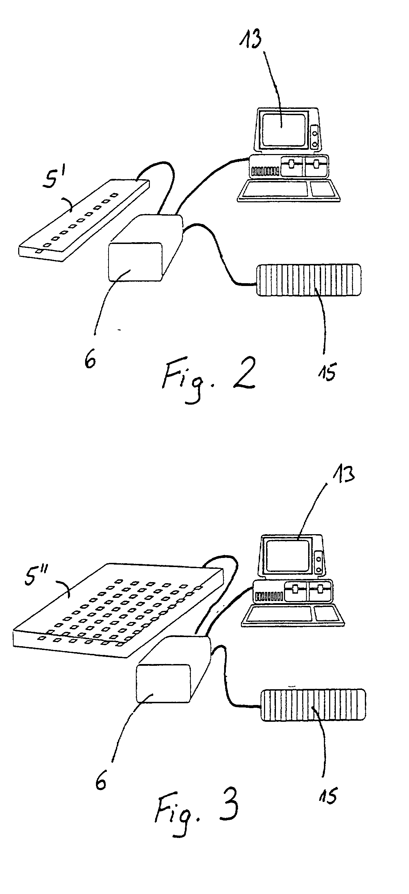

In Fig. 2 ist eine bevorzugte Ausgestaltung des Sensors als Zeilensensor 5' dargestellt. Dieser Sensor ist mit der Auswerteeinrichtung 6 verbunden, die beispielsweise den Vorverstärker 7 die Signalverarbeitungseinrichtung 9 und die Signalkorrektureinrichtung 11 aufweist. Die Auswerteeinrichtung 6 ist gemäß Fig. 2 mit einer Datenverarbeitungseinrichtung, beispielsweise in Form eines PCs 13 verbunden, der zur Bedienung und Visualisierung dient. Weiterhin ist die Auswerteeinrichtung mit der Maschinensteuerung oder SPS 15 der Arzneimittelabfülleinrichtung verbunden, die die Abfüllung der Arzneimittel in die Verpackungen entsprechend steuert und beeinflußt.

Die Ausführungsform gemäß Fig. 3 unterscheidet sich von jener von Fig. 2 dadurch, daß anstelle eines Zeilensensors 5' ein Matrixsensor 5" mit der Auswerteeinrichtung 6 verbunden ist. Wie aus Fig. 3 ersichtlich, weist der Matrixsensor 5' eine Vielzahl von Einzelerfassungssensoren auf, deren Anordnung der Anordnung der Höfe oder Näpfe 1 der Blisterverpackung entspricht. Dadurch können eine große Anzahl von Höfen 1, beispielsweise alle abgefüllten Volumen einer Verpackung oder mehrerer Verpackungen gleichzeitig erfaßt werden, wodurch eine entsprechende Hochleistungsabfüllung bei vollständiger Kontrolle aller abgefüllten Höfe ermöglicht wird.

## Patentansprüche

1. Verfahren zur Überprüfung der Füllung von Höfen oder Näpfen (1) einer Blisterverpackung für Arzneimittel, die mit einer pulverförmigen oder festen Substanz (3) gefüllt wurden, **dadurch gekennzeichnet, daß** das abgefüllte Volumen der pulverförmigen oder festen Substanz mittels eines Sensors (5, 5', 5") erfaßt wird und der erfaßte Volumenwert einer Auswerteeinrichtung (6) zugeführt wird, in der ein Vergleich des ermittelten Volumenwerts mit einem Volumen-Sollwert durchgeführt wird.

2. Verfahren nach Anspruch 1, **dadurch gekennzeichnet, daß** der Vergleichswert aus ermitteltem Volumenwert und Volumen-Sollwert mittels einer Anzeigevorrichtung angezeigt wird.

3. Verfahren nach Anspruch 1 oder 2, **dadurch gekennzeichnet, daß** jeder Hof oder Napf der Verpackung mittels eines Sensors (5, 5', 5") erfaßt wird.

4. Verfahren nach einem der Ansprüche 1 bis 3, **dadurch gekennzeichnet, daß** die Anzahl der vorgesehenen Sensoren der Anzahl der Höfe oder Näpfe in einer Reihe der Verpackung entspricht.

5. Verfahren nach einem der Ansprüche 1 bis 3, **dadurch gekennzeichnet, daß** die Anzahl der Sensoren der Anzahl der Höfe oder Näpfe einer Verpackung entspricht.

6. Verfahren nach einem der Ansprüche 1 bis 5, **dadurch gekennzeichnet, daß** der Sensor ein kapazitiver Meßsensor ist.

7. Verfahren nach einem der Ansprüche 1 bis 5, **dadurch gekennzeichnet, daß** der Sensor ein optischer dreidimensionaler Bilderfassungssensor ist.

## Claims

1. A method for checking the filling of cups (1) of a blister package for pharmaceuticals which is filled with a powdery or solid substance (3) **characterized in that** the volume filled of the powdery or solid substance is detected by means of a sensor (5, 5', 5") and the detected volume value is supplied to an evaluation unit (6) in which a comparison of the volume value with a volume target value is carried out.

2. A method according to claim 1 **characterized in that** the comparison value derived from the volume value detected and the volume target value is displayed by means of a display device.

3. A method according to claims 1 and 2 **characterized in that** each cup of the package is detected by means of a sensor (5, 5', 5").

4. A method according to one of the claims 1 through 3 **characterized in that** the number of the sensors provided for corresponds to the number of cups in a row of the package.

5. A method according to one of the claims 1 through 3 **characterized in that** the number of the sensors corresponds to the number of cups in a package.

6. A method according to one of the claims 1 through 5 **characterized in that** the sensor is a capacitive test probe.

7. A method according to one of the claims 1 through 5 **characterized in that** the sensor is an optical three-dimensional image detection sensor.

## Revendications

1. Procédé pour vérifier le remplissage d'alvéoles (1) d'un blister pour médicaments, qui ont été remplies d'une substance (3) pulvérulente ou solide, **caractérisé en ce que** le volume empli de la substance pulvérulente ou solide est enregistré au moyen d'un détecteur (5, 5', 5"), et la valeur volumique enregistrée est transmise à un dispositif d'analyse (6), dans lequel est réalisée une comparaison entre la valeur volumique déterminée et une valeur de consigne du volume.

2. Procédé suivant la revendication 1, **caractérisé en ce que** la valeur comparative entre la valeur volumique déterminée et la valeur de consigne du volume est indiquée au moyen d'un dispositif d'affichage.

3. Procédé suivant l'une des revendications 1 et 2, **caractérisé en ce que** chaque alvéole de l'emballage est enregistrée au moyen.d'un détecteur (5, 5', 5'').

4. Procédé suivant l'une des revendications 1 à 3, **caractérisé en ce que** le nombre des détecteurs prévus correspond au nombre des alvéoles dans une rangée de l'emballage.

5. Procédé suivant l'une des revendications 1 à 3, **caractérisé en ce que** le nombre des détecteurs correspond au nombre des alvéoles d'un emballage.

6. Procédé suivant l'une des revendications 1 à 5, **caractérisé en ce que** le détecteur est un détecteur capacitif de mesure.

7. Procédé suivant l'une des revendications 1 à 5, **caractérisé en ce que** le détecteur est un détecteur optique à trois dimensions.
